# EUROPÄISCHE PATENTANMELDUNG

(11) **EP 1 180 665 A2**
(43) Veröffentlichungstag der Anmeldung: **20.02.2002**
(21) Anmeldenummer: 01250262.1
(22) Anmeldetag: 16.07.2001
(51) Int. Cl.: G01D 5/347, B62D 15/02

(54) **Lenkwinkelsensor für Kraftfahrzeuge**

(30) Priorität: 11.08.2000 DE 10041507
(71) Anmelder: Takata-Petri AG, 63743 Aschaffenburg (DE)
(72) Erfinder: Front, Joachim, 63834 Sulzbach (DE)
(74) Vertreter: Baumgärtel, Gunnar, Dr.

(57) **Zusammenfassung**

Die Erfindung betrifft einen Lenkwinkelsensor für Kraftfahrzeuge zur Bestimmung des Lenkwinkels einer Lenkradanordnung mit einer Codespur, die einer von zwei zueinander verdrehbaren Baugruppen der Lenkradanordnung zugeordnet ist, und mit einer Erfassungseinrichtung zur Abtastung der Codespur, die der anderen Baugruppe zugeordnet ist und die bei Abtastung der Codespur ein Signal erzeugt, aus dem der Lenkwinkel bestimmbar ist, wobei die Codespur als Inkrementalspur ausgebildet ist, mit der ein inkrementales Signal erzeugbar ist. Erfindungsgemäß ist vorgesehen, daß in die Inkrementalspur (I) mindestens eine Referenzmarke (R) integriert ist, mittels der das durch Abtastung der Inkrementalspur (I) erzeugte Signal lokal modifiziert wird.

## Beschreibung

Die Erfindung betrifft einen Lenkwinkelsensor für Kraftfahrzeuge nach dem Oberbegriff des Patentanspruchs 1.

Ein derartiger Lenkwinkelsensor dient zur Bestimmung des Lenkwinkels einer Lenkradanordnung und umfaßt eine Codespur, die einer von zwei zueinander drehbaren Baugruppen der Lenkradanordnung, z.B. einem zusammen mit dem Lenkrad drehbaren Rotor zugeordnet ist, und eine Erfassungseinrichtung zur Abtastung der Codespur, die der anderen Baugruppe, z.B. einem ortsfesten Stator, zugeordnet ist und die bei Abtastung der Codespur ein Signal erzeugt, aus dem der aktuelle Lenkwinkel bestimmbar ist, vergl. DE197 104 A1. Der bekannte Lenkwinkelsensor ist dabei zur Bestimmung des Absolutwertes des Drehwinkels ausgebildet.

Alternativ kann die Codespur als Inkrementalspur ausgebildet sein, durch deren Abtastung ein sogenanntes Inkrementalsignal erzeugt wird, also ein Signal, das lediglich Aussagen über die Änderung des Lenkwinkels, nicht aber über den Absolutwert des Lenkwinkels erlaubt.

Für die Steuerung bestimmter Funktionsgruppen eines Kraftfahrzeugs, z.B. des Bremssystems, in Abhängigkeit von dem Lenkwinkel ist es jedoch erforderlich, nicht nur die Änderung des Lenkwinkels zu erfassen, sondern den Absolutwert des Lenkwinkels zu kennen. Zu diesem Zweck ist es bekannt, in dem Lenkwinkelsensor neben einer Inkrementalspur eine zusätzliche Spur anzuordnen, die mindestens eine Referenzmarke enthält, durch deren Abtastung ein Signal erzeugbar ist, aus dem unmittelbar der Wert des Lenkwinkels ableitbar ist. Aus der Kombination dieses Referenzsignales mit dem Inkrementalsignal, das eine sehr hohe Winkelauflösung aufweist, läßt sich mit hoher Genauigkeit der jeweils aktuelle Lenkwinkel ermitteln. Derartige Lenkwinkelsensoren haben den Nachteil, daß sie vom Aufbau her komplizierter und daher in der Herstellung teurer sind als Lenkwinkelsensoren auf der Basis eines reinen inkrementalen Meßsystems und zudem einen größeren Platzbedarf aufweisen.

Der Erfindung liegt die Aufgabe zugrunde, einen Lenkwinkelsensor zu schaffen, der bei möglichst kompaktem Aufbau kostengünstig hergestellt werden kann und der die Ermittlung des Absolutwertes des Lenkwinkels gestattet.

Diese Aufgabe wird erfindungsgemäß durch die Schaffung eines Lenkwinkelsensors mit den Merkmalen des Patentanspruchs 1 gelöst.

Danach ist in die Inkrementalspur mindestens eine Referenzmarke integriert, mittels der das durch Abtastung der Inkrementalspur erzeugte Signal lokal modifiziert wird.

Dadurch, daß das Signal aufgrund der mindestens einen Referenzmarke an einer oder mehreren Stellen lokal modifiziert wird, enthält das Inkrementalsignal zusätzlich eine Absolutpositionsinformation hinsichtlich des Lenkwinkels.

Diese zusätzliche Absolutpositionsinformation läßt sich gewinnen, ohne daß zusätzlicher Bauraum für den Lenkwinkelsensor erforderlich wäre; denn die zur Gewinnung der Absolutpositionsinformation dienende mindestens eine Referenzmarke ist in die Inkrementalspur selbst integriert. Eine zusätzliche, neben der Inkrementalspur angeordnete Referenzspur ist für die Gewinnung der Absolutpositionsinformation nicht erforderlich.

Der erfindungsgemäße Lenkwinkelsensor zeichnet sich daher gegenüber solchen bekannten Meßsystemen, bei denen neben einer inkrementalen Meßanordnung, die einer genaue Positionsbestimmung mit hoher Winkelauflösung dient, noch zusätzlich eine Referenzspur vorgesehen ist, die die Gewinnung einer Absolutpositionsinformation ermöglicht, durch eine kompakte Bauweise aus.

Die Referenzmarke wird demnach in Erstreckungsrichtung der Inkrementalspur zwischen Elementen der Inkrementalspur selbst angeordnet.

Bei dem erfindungsgemäßen Lenkwinkelsensor ist die Referenzmarke zur besonders platzsparenden Integration in die Inkrementalspur vorzugsweise derart ausgebildet, daß sie quer zur Erstreckungsrichtung der Codespur nicht über diese hinausragt. Hierdurch wird sichergestellt, daß die Gewinnung der Absolutpositionsinformation keinerlei zusätzlichen Bauraum für den Lenkwinkelsensor erfordert.

Die Inkrementalspur kann beispielsweise durch in Erstrekkungsrichtung der Inkrementalspur periodisch hintereinander angeordnete Markierungen, insbesondere in Form von Strichen, gebildet werden.

Die zur Gewinnung einer Absolutpositionsinformation dienende Referenzmarke kann durch Variation mindestens einer Markierung der Inkrementalspur und/oder eines Zwischenraumes zwischen zwei Markierungen gebildet werden. So kann die Referenzmarke beispielsweise durch eine lokale Variation des Abstandes zweier benachbarter Markierungen der Inkrementalspur oder durch Veränderung der Ausdehnung (Breite) einer Markierung in Erstreckungsrichtung der Inkrementalspur erzeugt werden (entsprechend einer lokalen Phasenverschiebung). Insbesondere kann die Referenzmarke als Überdekkung eines Zwischenraumes zwischen zwei Markierungen ausgebildet sein oder umgekehrt dadurch, daß anstelle einer Markierung in der Inkrementalspur ein zusätzlicher Zwischenraum vorgesehen ist.

Die Erfassungseinrichtung zur Abtastung der Inkrementalspur kann eines oder mehrere Sensorelemente umfassen, wobei vorzugsweise mindestens drei Sensorelemente vorgesehen sind, die (insbesondere äquidistant) hintereinander entlang der Codespur angeordnet sind.

Dabei ist mit Vorteil einem Sensorelement die sogenannte Nullpunktlage zugeordnet, d.h., das Lenkrad befindet sich in einer Mittellage (entsprechend einer Geradeausfahrt), wenn dieses Sensorelement die Referenzmarke überdeckt. Es sind jedoch selbstverständlich auch andere Referenzlagen möglich.

Die anderen Sensorelemente sind vorzugsweise beidseitig der Nullpunktlage jeweils in einem Abstand (n + x) b angeordnet, wobei n eine natürliche Zahl und x < 1 ist und b die Periode der Inkrementalspur bezeichnet. Jedenfalls sollten für eine Auswertung der Signale zumindest zwei Sensoren in einem Abstand voneinander angeordnet sein, der ungleich einem ganzzahligen Vielfachen der Periode der Inkrementalspur ist.

Bei der Integration einer Referenzmarke in eine Inkrementalspur besteht das Problem, daß die Auflösung des Inkrementalsignals lokal (nämlich in dem Bereich, in dem das Inkrementalsignal aufgrund der Referenzmarke modifiziert wird) vermindert ist. Insbesondere kann die lokale Modifikation des von einem Sensorelement bei Abtastung der Inkrementalspur erzeugten Signals, die auf die Integration der Referenzmarke in die Inkrementalspur zurückzuführen ist, dazu führen, daß die Auswertung des von dem genannten Sensorelement erzeugten Signals zu einem verfälschten Wert für den Lenkwinkel führt. Es würde sich also ein anderer Wert für den Lenkwinkel ergeben als bei Abtastung einer Inkrementalspur, die keine Referenzmarke aufweist.

Zur Behebung dieses Problems ist gemäß Patentanspruch 11 bei einem Verfahren zur Bestimmung des Lenkwinkels einer Lenkradanordnung in einem Kraftfahrzeug mit einem Lenkwinkelsensor der vorstehend genannten Art vorgesehen, daß
a) zur Abtastung der Codespur eine Erfassungseinrichtung mit mindestens zwei (vorzugsweise mindestens drei) Sensorelementen verwendet wird,
b) die von den Sensorelementen durch Abtastung der Codespur erzeugten Signale einer Auswerteeinrichtung, z.B. einer Auswerteelektronik, zugeführt werden,
c) aus den der Auswerteeinrichtung zugeführten Signalen der einzelnen Sensorelemente der jeweils aktuelle Lenkwinkel bestimmt wird, indem der Lenkwinkel aufgrund jedes durch Abtastung der Inkrementalspur erzeugten charakteristischen Signals jeweils um einen vorbestimmten Wert verändert wird und
d) die durch Auswertung des von einem Sensorelement erzeugten ersten Signals ermittelte Änderung des Lenkwinkels korrigiert wird, wenn durch Auswertung des von einem anderen Sensorelement erzeugten zweiten Signals festgestellt wird, daß ein aus dem ersten Signal ermittelter Wert des Lenkwinkels durch die lokale Modifikation des Signals aufgrund der Referenzmarke verfälscht worden ist.

In dem Fall, in dem in die Inkrementalspur eine Referenzmarke integriert ist, deren Ausdehnung von der Ausdehnung der regulären Markierungen bzw. Zwischenräume der Inkrementalspur abweicht (z.B. weil die Referenzmarke durch die vollständige Überdeckung eines Zwischenraumes zwischen zwei Markierungen der Inkrementalspur durch eine zusätzliche Markierung oder durch das Weglassen einer Markierung zwischen zwei Zwischenräumen gebildet wird), werden im Bereich der Referenzmarke jeweils einzelne Flanken des Inkrementalsignals unterdrückt. Diese unterdrückten Signalflanken werden nachträglich wieder in die Bestimmung des Lenkwinkels einbezogen, nachdem die Referenzmarke als solche erkannt worden ist. Hierbei können z.B. die von mindestens einem weiteren Sensorelement erzeugten Signale ausgewertet und zur Korrektur des erstgenannten Signals herangezogen werden. Der genaue Ablauf der Korrektur hängt von der Ausdehnung der Referenzmarke ab.

Weitere Merkmale und Vorteile der Erfindung werden bei der nachfolgenden Beschreibung eines Ausführungsbeispiels anhand der Figuren deutlich werden.

Es zeigen:
- Fig. 1 -: eine Inkrementalspur, in die eine Referenzmarke zur Nullpunkterkennung des Lenkwinkels integriert ist;
- Fig. 2 -: eine Sensoranordnung zur Abtastung der Inkrementalspur aus Figur 1;
- Fig. 3 -: die von der Sensoranordnung aus Figur 2 beim Abtasten der Inkrementalspur erzeugten Sensorsignale, wenn auf die Referenzmarke in der Inkrementalspur verzichtet wird;
- Fig. 4 -: die durch Abtastung der Inkrementalspur aus Figur 1 mittels der Sensoranordnung aus Figur 2 erzeugten Sensorsignale unter Berücksichtigung mehrfacher Richtungswechsel beim Lenken;
- Fig. 5 -: die durch Abtastung der Codespur aus Figur 1 mittels einer Sensoranordnung gemäß Figur 2 erzeugten Sensorsignale bei nur einer Änderung der Drehrichtung des Lenkrades;
- Fig. 6 -: die durch Abtastung der Codespur aus Figur 1 mittels einer Sensoranordnung gemäß Figur 2 erzeugten Sensorsignale, wenn eine Änderung der Drehrichtung des Lenkrades stattfindet, unmittelbar bevor ein Sensorelement die Referenzmarke überdeckt;
- Fig. 7 -: die bei Abtastung einer Codespur aus Figur 1 mittels einer Sensoranordnung gemäß Figur 2 erzeugten Sensorsignale, wobei eine Änderung der Drehrichtung des Lenkrades erfolgt, während die Referenzmarke durch ein Sensorelement überdeckt ist;
- Fig. 8 -: die durch Abtastung der Codespur aus Figur 1 mittels einer Sensoranordnung gemäß Figur 2 erzeugten Sensorsignale, wobei die Erkennung der Nullpunktlage des Lenkrades gesondert hervorgehoben ist;
- Fig. 9 -: eine Abwandlung der Sensorsignale aus Figur 8, wobei der Nullpunkt erkannt werden soll, wenn eine Änderung der Drehrichtung des Lenkrades erfolgt, während die Referenzmarke durch ein Sensorelement überdeckt ist;
- Fig. 10 -: eine schematische Darstellung einer üblichen Anordnung zur Bestimmung des Lenkwinkels in einer Lenkradanordnung für ein Kraftfahrzeug.

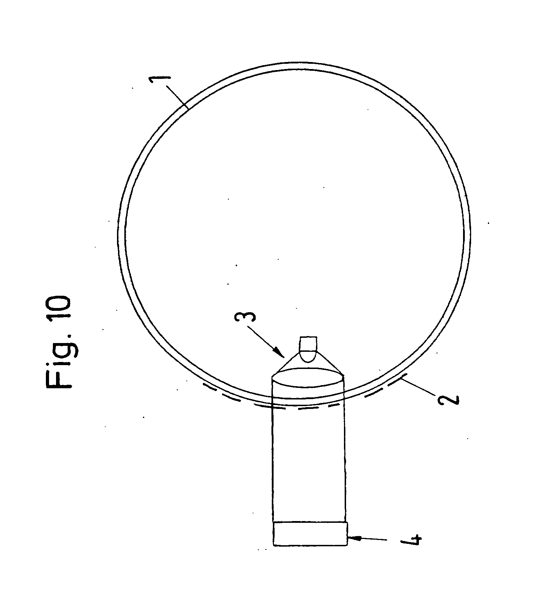

Es sei zunächst auf Figur 10 verwiesen, in der eine übliche Anordnung (Lenkwinkelsensor) zur Bestimmung des Lenkwinkels einer Lenkradanordnung in einem Kraftfahrzeug dargestellt ist.

Auf einem drehfest mit dem Lenkrad der Lenkradanordnung verbundenen und daher gemeinsam mit dem Lenkrad drehbaren kreisringförmigen Rotor 1 ist umlaufend über einen Winkel von bis zu 360° eine Codespur 2 angebracht, die mittels einer ortsfesten (an einem sogenannten Stator angebrachten) Erfassungseinrichtung 3, 4 im Durchlichtverfahren abtastbar ist. Die Erfassungseinrichtung umfaßt einen Sender 3 und einen Empfänger 4, der mit einer Auswerteeinheit, z.B. in Form einer Auswerteelektronik (bzw. eines Prozessors), verbunden ist. Rotor-Stator-Systeme, an denen sich die Codespur und die Erfassungseinrichtung zu Bestimmung des Lenkwinkels anordnen lassen, sind z.B. in der DE 195 06 865 C1, der DE 195 25 928 C1 und der DE 196 47 705 C2 beschrieben, auf die diesbezüglich voll Bezug genommen wird.

Die Erfassungseinrichtung kann im Zusammenhang mit der vorliegenden Erfindung in einfacher Weise durch eine Gabellichtschranke realisiert werden. Es sind jedoch auch komplexere Sensoranordnungen, z.B. unter Verwendung einer CCD-Zeile, denkbar.

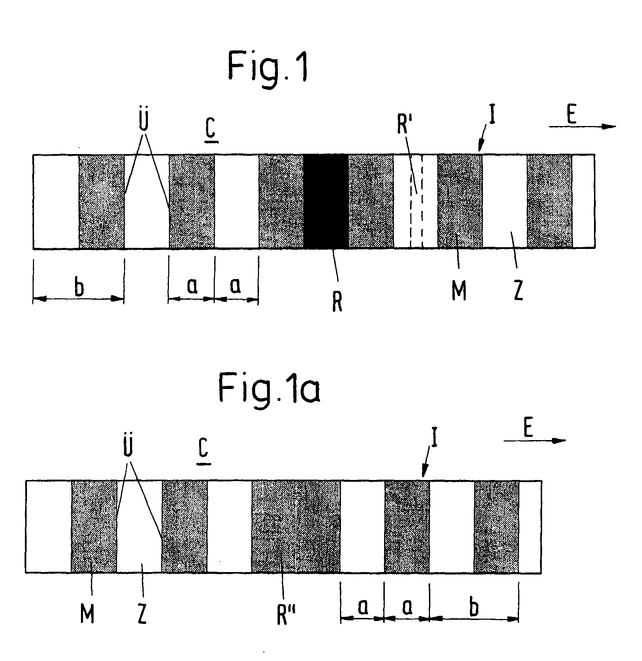

In Figur 1 ist eine durch eine Erfassungseinrichtung in Form einer Sensoranordnung abtastbare Inkrementalspur I dargestellt, die aus einer Vielzahl in einer Erstreckungsrichtung E periodisch hintereinander angeordneter Markierungen M gleicher Breite a und Zwischenräumen Z gleicher Breite a besteht. Dabei können die Dicken der Markierungen M einerseits und der Zwischenräume Z andererseits im allgemeinen unterschiedlich sein. Bei der Verwendung dieser Inkrementalspur I zur Bestimmung des Lenkwinkels einer Lenkradanordnung in einem Kraftfahrzeug erstreckt sich die Inkrementalspur I in der Regel entlang einer Kreisbahn, so daß Figur 1 die Projektion einer solchen Inkrementalspur I auf eine Ebene darstellt.

In diese Inkrementalspur I, die als eine periodische Strichstruktur mit der Periode b, bestehend aus in einem definierten Abstand b hintereinander angeordneter Striche gleicher Breite a in einem Abstand a angesehen werden kann, ist eine Referenzmarke R integriert. Diese Referenzmarke R ist in dem Beispiel gemäß Figur 1 dadurch gebildet, daß die Referenzmarke eine größere Ausdehnung in Erstreckungsrichtung E aufweist als die Markierungen M der Inkrementalspur I. Speziell ist vorliegend einer der Zwischenräume Z zwischen zwei Markierungen M mit einer zusätzlichen Markierung überdeckt. Im Bereich der Referenzmarke R schließen sich somit drei Markierungen M ohne Zwischenraum unmittelbar aneinander an. Selbstverständlich kann die Referenzmarke R aber auch eine andere Ausdehnung entlang der Erstreckungsrichtung E der Inkrementalspur I aufweisen, solange diese sich von der Ausdehnung a der Markierungen M der Inkrementalspur I unterscheidet.

Ein Beispiel hierfür ist in Fig. la dargestellt, mit einer Referenzmarke R", deren Ausdehnung 2*a in Erstreckungsrichtung E der Inkrementalspur I dem doppelten der Ausdehnug a der Markierungen M bzw. der Zwischenräume Z entspricht. Es erleichtert die Auswertung der durch Abtastung der Inkrementalspur I sowie der Referenzmarke erzeugten Signale, wenn die Ausdehnung der Referenzmarke einem ganzzahligen Vielfachen der Ausdehnung der Markierungen M bzw. der Zwischenräume Z entspricht; die Erfindung ist jedoch nicht auf solche speziellen Gestaltungen der Referenzmarke beschränkt.

Ferner bestehen auch andere Möglichkeiten zur Bildung einer Referenzmarke als durch Variation der Ausdehnung einer Markierung, beispielsweise durch Änderung der Beschaffenheit einer Markierung M.

Durch die Inkrementalspur I und die zusätzliche Referenzmarke R wird eine Codespur C gebildet, durch deren Abtastung sowohl ein Inkrementalsignal als auch eine Absolutpositionsinformation gewonnen werden kann, wie nachfolgend im einzelnen dargestellt werden wird.

Das Inkrementalsignal ist dabei vor allem durch die Signalflanken charakterisiert, die auftreten, wenn die zur Erfassung der Inkrementalspur I vorgesehene Erfassungseinrichtung (Sensoranordnung) die Übergänge Ü zwischen einer Markierung M und einem Zwischenraum Z bzw. einem Zwischenraum Z und einer Markierung M erfaßt, was zu entsprechenden Signalflanken in dem Ausgangssignal der Erfassungseinrichtung führt. Die Absolutpositionsinformation ist demgegenüber dadurch charakterisiert, daß bei dem in Figur 1 dargestellten Beispiel im Bereich der Referenzmarke R zwei Übergänge Ü wegfallen, da die Referenzmarke R einen Zwischenraum Z vollständig überdeckt, mit der Folge, daß die Referenzmarke die Breite3*a aufweist.

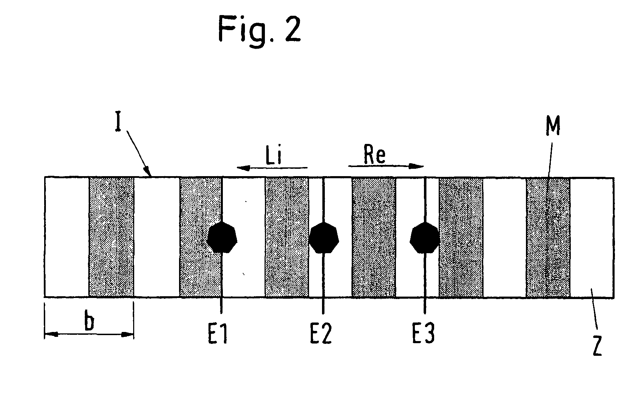

In Figur 2 ist eine Erfassungseinrichtung in Form einer Sensoranordnung mit drei Sensorelementen E1, E2 und E3 dargestellt, die zur Abtastung der Inkrementalspur I sowie der darin integrierten Referenzmarke R dient, die in Fig. 2 nicht dargestellt ist. Dabei sind die beiden äußeren Sensorelemente E1 bzw. E3 von dem mittleren Sensorelement E2 vorzugsweise jeweils in dem Abstand (n+1/3)*b mit n=1 angeordnet, wobei b die Periode der Inkrementalspur I bezeichnet und bei einer ringförmigen Anordnung der Inkrementalspur I einen Winkel darstellt. Bei einer derartigen Anordnung, bei der die beiden äußeren Sensorelemente E1 bzw. E3 jeweils in einem Abstand von dem mittleren Sensorelement E2 angeordnet sind, der ungleich der Periode b der Inkrementalspur I ist, wobei die Abweichung von der Periode im vorliegenden Fall 1/3 beträgt, können durch Auswertung der mit den Übergängen Ü verknüpften Signalflanken die Lenkwinkel mit einer Genauigkeit von b/3 bestimmt werden.

Wird für den Abstand zwischen den Sensorelementen allgemein die Formel (n + 1/m)*b verwendet, wobei n und m jeweils natürliche Zahlen sind, so werden zweckmäßigerweise jeweils m unterschiedliche Sensorelemente verwendet. Je größer m ist, desto kleiner ist die Abweichung der Abstände zwischen den einzelnen Sensorelementen von der Periode b und desto größer ist die mit der Sensoranordnung erreichte Winkelauflösung. Allerdings wird dann auch eine entsprechend größere Anzahl an Sensorelementen benötigt.

Bei einer Drehung des Lenkrades nach links bzw. rechts wird die Inkrementalspur I entlang der Richtung Li bzw. Re an den Sensorelementen E1, E2 und E3 vorbeigeführt, wobei die Sensorelemente E1, E2 und E3 die Inkrementalspur I abtasten und entsprechende inkrementale Sensorsignale erzeugen, aus denen sich die Änderung des Lenkwinkels errechnen läßt.

Die erfindungsgemäß vorgesehene Ausgestaltung der Inkrementalspur, in die unmittelbar eine Referenzmarke zur Erkennung einer Referenzlage, z.B. der Nullpunktlage einer Lenkradanordnung integriert ist, läßt sich unabhängig davon verwirklichen, welches physikalische Prinzip dem Lenkwinkelsensor zugrunde liegt. So kann es sich um einen optischen Lenkwinkelsensor handeln, bei dem die Codespur aus hintereinander angeordneten Marken und Zwischenräumen in Form von lichtdurchlässigen und lichtundurchlässigen Bereichen bzw. reflektierenden und nicht reflektierenden Bereichen handelt, die durch eine entsprechende optische Sensoranordnung, z.B. in Form von Lichtschranken, CCD's, Diodenzeilen, Transistorzeilen etc. abgetastet werden. Es ist ferner auch eine Kombination von Durchlicht- und Auflichtverfahren denkbar, z.B. in Abhängigkeit von der Wellenlänge des jeweils gerade auf die Codespur auftreffenden Lichtes.

Die Referenzmarke R aus Fig. 1 kann bei den genannten Beispielen eines optischen Lenkwinkelsensors z.B. dadurch gebildet werden, daß ein lichtdurchlässiger durch einen lichtundurchlässigen Bereich oder ein nicht reflektierender durch einen reflektierenden Bereich ersetzt wird oder umgekehrt. Auch ist denkbar, zur Bildung der Inkrementalspur hintereinander abwechselnd eine Vielzahl lichtdurchlässiger Marken bzw. lichtundurchlässiger Zwischenräume anzuordnen, so daß die Inkrementalspur im Durchlichtverfahren abgetastet werden kann und als Referenzmarke einen Bereich der Inkrementalspur reflektierend auszulegen, so daß diese im Auflichtverfahren abtastbar ist.

Ferner kann dem Lenkwinkelsensor ein magnetischer Prinzip zugrunde liegen, z.B. in Form eines durch Hall-Sensoren abtastbaren Multipolringes mit Markierungen in Form von Nordpolen und zugehörigen Zwischenräumen in Form von Südpolen oder in Form einer auf einem magnetoresistiven Prinzip beruhende Anordnung. In gleicher Weise läßt sich die Erfindung auch anwenden auf induktive Lenkwinkelsensoren sowie auf die weiteren bekannten und üblichen physikalischen Prinzipien, die zur Bildung eines Lenkwinkelsensors geeignet sind.

Von Bedeutung für die Erfindung ist allein, daß in die Inkrementalspur, die durch die zugehörige Erfassungseinrichtung abgetastet werden soll, unmittelbar eine Referenzmarke integriert ist, die zur Erkennung einer Referenzlage eine lokale Modifikation des durch Abtasten der Inkrementalspur erzeugten Ausgangssignales bewirkt. Integration der Referenzmarke in die Inkrementalspur bedeutet dabei, daß die Referenzmarke - in Erstreckungsrichtung der Inkrementalspur betrachtet - zwischen deren Markierungen angeordnet ist. Hierdurch kann die Inkrementalspur im Bereich der Referenzmarke im wesentlichen die gleiche Breite (Ausdehnung quer zu ihrer Erstreckungsrichtung) aufweisen wie in den übrigen Bereichen. Das heißt, die Referenzmarke kann derart unmittelbar in die Inkrementalspur integriert werden, daß die äußere Kontur der Inkrementalspur durch die zusätzliche Referenzmarke nicht verändert wird; insbesondere braucht die Referenzmarke quer zur Erstreckungsrichtung der Inkrementalspur nicht über diese hinauszuragen.

Die in Fig. 1 dargestellte Referenzmarke R stellt hierbei nur eine von vielen Möglichkeiten dar, um das beim Abtasten der Codespur C erzeugte Signal lokal zu modifizieren. Wesentlich ist lediglich, daß zur Bildung der Codespur C in die periodisch ausgestaltete Inkrementalspur I mindestens eine Unregelmäßigkeit in Form einer beliebigen Referenzmarke integriert ist, durch die die Periodizität der Inkrementalspur an einer Stelle (oder ggf. auch an mehreren Stellen) gestört ist. Anhand dieser Referenzmarke (bzw. ggf. mehrerer Referenzmarken) wird eine Referenzlage (z.B. die Nullpunktlage, die dem Geradeauslauf des Fahrzeugs entspricht) hervorgehoben, um eine Absolutpositionsbestimmung zu ermöglichen.

So ist es möglich, daß die Referenzmarke lediglich einen Teil eines Zwischenraumes Z oder einer Markierung M der Inkrementalspur I überdeckt oder alternativ sowohl eine Markierung M als auch einen Zwischenraum Z jeweils teilweise überdeckt, wobei Ersteres beispielhaft anhand der in Fig. 1 gestrichelt dargestellten Markierung R' angedeutet ist. Die konkrete Ausgestaltung der Referenzmarke muß dabei selbstverständlich nicht zwingend durch den Ersatz eines Zwischenraumes oder eines Teiles davon durch eine Markierung bzw. durch den Ersatz einer Markierung oder eines Teiles davon durch einen Zwischenraum ausgeführt sein. Die Referenzmarke kann ebenso gut eine sowohl von den Markierungen als auch von den Zwischenräumen vollständig abweichende Beschaffenheit aufweisen. So kann beispielsweise bei einer im Durchlichtverfahren abtastbaren Inkrementalspur die Referenzmarke durch einen reflektierenden Bereich gebildet werden, der sich im Auflichtverfahren abtasten läßt. Ferner könnte bei einer im Durchlichtverfahren abtastbaren Inkrementalspur vorgesehen sein, daß einer der lichtdurchlässigen Bereiche der Codespur eine andere Durchlässigkeit aufweist als alle übrigen Bereiche, die die Markierungen der Inkrementalspur bilden. In ähnlicher Weise kann in eine im Auflichtverfahren abtastbare Inkrementalspur eine Referenzmarke dadurch integriert werden, daß einer der reflektierenden Bereiche der Codespur eine andere Reflektivität aufweist als die übrigen, die Marken der Inkrementalspur bildenden reflektierenden Bereiche. Bei einer magnetisch abtastbaren Inkrementalspur, die aus einer periodischen Anordnung von Nord- und Südpolen besteht, kann die Referenzmarke durch einen nicht magnetischen Abschnitt gebildet werden.

Weiterhin kann die in den Fig. 1 und 2 dargestellte Ausführungsform der Erfindung auch durch Abwandlung der die Codespur abtastenden Erfassungseinrichtung modifiziert werden. So kann beispielsweise sowohl die Anzahl als auch die Anordnung der zur Abtastung erforderlichen Sensorelemente variiert werden, wobei insbesondere auch eine Anordnung der einzelnen Sensorelemente mit unterschiedlichen Abständen möglich ist.

Im folgenden wird nun die Bestimmung des Lenkwinkels in einer Lenkradanordnung mittels des in den Fig. 1 und 2 dargestellten Lenkwinkelsensors erläutert. Dabei wird davon ausgegangen, daß eine punktweise Abtastung der Codespur C an bestimmten Stellen mittels der Sensorelemente E1, E2, E3 erfolgt, bei denen es sich beispielsweise um Lichtschranken handeln kann.

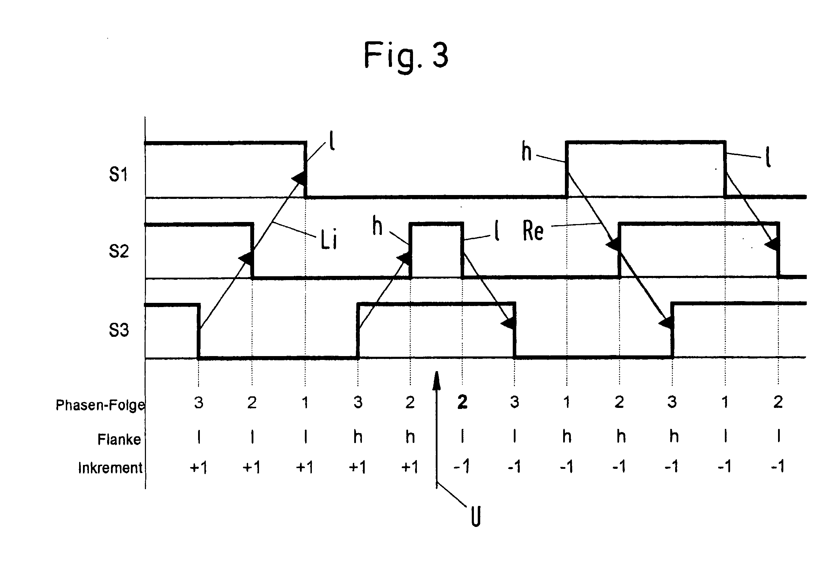

In Fig. 3 sind zunächst die Ausgangssignale S1, S2 und S3 der drei Sensorelemente E1, E2 bzw. E3 in dem Fall dargestellt, daß eine reine Inkrementalspur I (also ohne die Referenzmarke R) abgetastet wird.

In diesem Fall bestehen die Ausgangssignale der einzelnen Sensorelemente (Sensorsignale) aus einer Abfolge von Impulsen mit einer ansteigenden Flanke h, einem daran anschließenden plateauartigen Abschnitt und einer abfallenden Flanke l. Eine Drehung des Lenkrades nach rechts, die in Fig. 3 durch die schräg nach unten verlaufenden Pfeile Re angedeutet ist, ist hierbei dadurch charakterisiert, daß die ansteigenden Flanken h bzw. die abfallenden Flanken l an den drei Sensorelementen E1, E2 und E3 möglichst nacheinander auftreten und zwar jeweils an dem ersten, äußeren Sensorelement E1 vor dem zweiten, mittleren Sensorelement E2 und an dem zweiten Sensorelement E2 vor dem äußeren, dritten Sensorelement E3. Bei einer Linksdrehung, die in Fig. 3 durch die schräg aufsteigenden Pfeile Li symbolisiert wird, ist die Reihenfolge genau umgekehrt, d.h., die ansteigenden bzw. abfallenden Flanken l, h treten jeweils zuerst an dem dritten Sensorelement E3, dann an dem zweiten Sensorelement E2 und zuletzt an dem ersten Sensorelement E1 auf. Durch Auswertung der Sensorsignale S1, S2 und S3, die dem ersten, zweiten und dritten Sensorelement E1, E2 bzw. E3 entsprechen, läßt sich somit jederzeit problemlos die aktuelle Drehrichtung des Lenkrades feststellen.

Zur Erleichterung der Zuordnung der Sensorsignale S1, S2 und S3 ist dabei in Fig. 3 in den Zeilen "Phasen-Folge" und "Flanke" jeweils angegeben, an welchem der Sensorelemente E1, E2 oder E3 (in der Zeile "Phasen-Folge" einfach mit 1, 2 bzw. 3 bezeichnet) gerade eine aufsteigende Flanke h oder eine abfallende Flanke l auftritt.

Bei jeder auftretenden Flanke, die einer Linksdrehung des Lenkrades zugeordnet werden kann, wird der aktuelle Lenkwinkel um einen bestimmten Betrag erhöht, was in Fig. 3 in der Zeile "Inkrement" jeweils durch das Symbol + 1 angedeutet ist. In entsprechender Weise erfolgt eine Absenkung des aktuellen Lenkwinkels um den genannten Wert, wenn eine der Flanken l, h einer Rechtsdrehung des Lenkrades zugeordnet wird, was in der Zeile "Inkrement" der Fig. 3 jeweils durch das Symbol -1 dargestellt wird.

Eine Richtungsumkehr ist hierbei dadurch charakterisiert, daß zwei Signalflanken h, l bzw. l, h nacheinander an ein und demselben Sensorelement auftreten. Denn da die Signalflanken h, l die Übergänge Ü zwischen den Markierungen M und Zwischenräumen Z der Inkrementalspur I (vergl. Fig. 2) widerspiegeln, läßt sich anhand der Signalflanken auch erkennen, daß derjenige Übergang Ü, der beim Drehen des Lenkrades in einer bestimmten Richtung zuletzt von einem Sensorelement überdeckt wurde, auch derjenige Übergang ist, der beim Drehen des Lenkrades in die andere Richtung als erstes wiederum von dem entsprechenden Sensorelement überdeckt wird.

Die so identifizierte Umkehr der Lenkrichtung ist in Fig. 3 mit dem Pfeil U angedeutet. Im Ausführungsbeispiel gemäß Fig. 3 trat also eine Richtungsumkehr auf, unmittelbar nachdem beim Ausgangssignal S2 des zweiten, mittleren Sensorelementes E2 eine aufsteigende Flanke h aufgetreten war. Demnach schließt sich in diesem Sensorsignal S2 unmittelbar eine abfallende Flanke l an, bevor bei einem der anderen Sensorsignale S1, S3 eine Signalflanke auftritt.

Unmittelbar nach Identifizierung einer Richtungsumkehr wird das Vorzeichen des Betrages umgekehrt, um den der Lenkwinkel bei jeder auftretenden Flanke geändert wird.

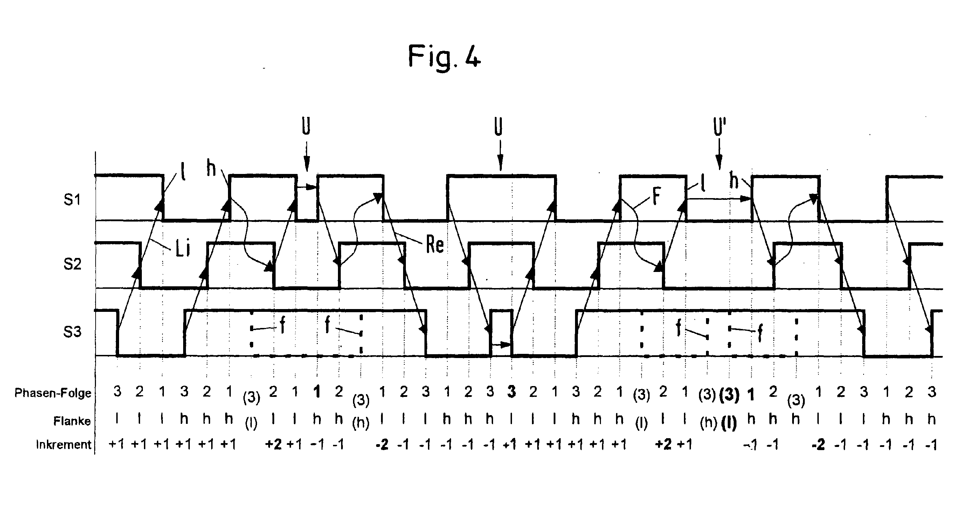

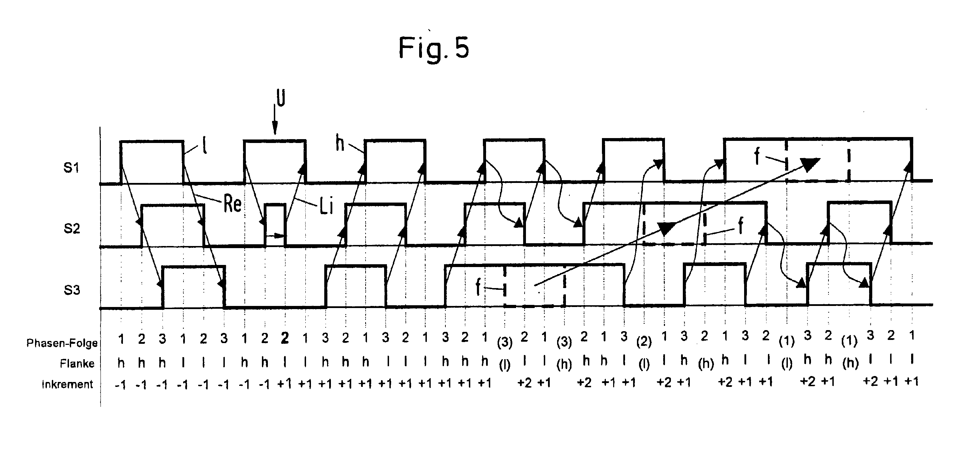

Anhand der Figuren 4 und 5 ist der Signalverlauf der durch die Sensorelemente E1, E2 und E3 erzeugten Ausgangssignale S1, S2 und S3 für typische Lenkbewegungen in dem Fall dargestellt, daß die Referenzmarke R in der Codespur C berücksichtigt ist. In diesem Fall fallen einzelne Flanken der Sensorsignale aus, wie in den Fig. 4 und 5 anhand der gestrichelt dargestellten ausfallenden Flanken f angedeutet ist. Bei einem der Sensorsignale S1, S2 und S3 tritt immer dann ein Ausfall von Flanken auf, wenn sich die Referenzmarke R an dem entsprechenden Sensorelement E1, E2 oder E3 vorbei bewegt. Denn da die Referenzmarke R gemäß Fig. 1 beispielhaft dadurch gebildet wird, daß ein Zwischenraum Z der Inkrementalspur I durch eine zusätzliche Markierung M überdeckt ist, schließen im Bereich der Referenzmarke R drei Markierungen unmittelbar aneinander an, und es fallen somit zwei Übergänge zwischen einer Markierung M und einem Zwischenraum Z weg, was zu einem Ausfall der entsprechenden Signalflanken führt. (Selbstverständlich können Änderungen der Struktur des Signales, die zum Ausfall und/oder zur Verschiebung von Signalflanken führen, auch durch andere Ausgestaltungen der Referenzmarke R, insbesondere hinsichtlich ihrer Breite, erreicht werden.)

Die ausgefallenen Signalflanken f können nachträglich anhand der Ausgangssignale der übrigen Sensorelemente erkannt werden. Als ein Beispiel hierfür sei die abfallende Signalflanke betrachtet, die gemäß Fig. 5 bei dem Sensorsignal S3 kurz vor der ersten Richtungsumkehr U ausfiel. Zum Zeitpunkt des Ausfalls dieser Signalflanke befand sich das Lenkrad gerade in einer Linksdrehung. Bei einer Linksdrehung treten - wie oben ausgeführt - die Signalflanken h, l an den Sensorelementen E1 bis E3 jeweils in der Reihenfolge auf, daß die entsprechende Signalflanke h oder l zunächst bei dem dritten Sensorsignal S3, dann beim zweiten Sensorsignal S2 und erst zuletzt beim ersten Sensorsignal S1 auftritt. Gemäß Fig. 5 traten zunächst in dieser Reihenfolge drei abfallende Flanken l und dann drei ansteigende Flanken h in den Sensorsignalen auf. Dann folgt aber unmittelbar ein Übergang zu einer abfallenden Flanke l in dem zweiten Sensorsignal S2, auf die wiederum eine abfallende Flanke l in dem ersten Sensorsignal S1 folgt. Bei Auswertung dieser Signalfolge wird erkennbar, daß hier eine Signalflanke vom abfallenden Typ (l) im dritten Sensorsignal S3 ausgefallen sein muß.

Durch den Ausfall einer Signalflanke in einem der Sensorsignale S1 bis S3 fällt natürlich auch die mit dem Auftreten dieser Signalflanke eigentlich verbundene Änderung des Lenkwinkels aus. Diese muß daher nachgeholt werden, sobald der Ausfall der Signalflanke erkannt worden ist. Dies geschieht dadurch, daß der Wert des Lenkwinkels nach dem Erkennen des Ausfalls einer Signalflanke so verändert wird, daß er den Wert aufweist, den er aufweisen würde, wenn die entsprechende Signalflanke nicht ausgefallen wäre.

Bei der ersten ausgefallenen Signalflanke f aus Fig. 4 handelt es sich beispielsweise um eine Signalflanke, die während einer Linksdrehung des Lenkrades aufgetreten wäre. Dementsprechend wäre es zu einer Erhöhung des Lenkwinkels um den obengenannten konstanten Wert gekommen. Diese Erhöhung des Lenkwinkels wird nachgeholt, indem bei der nächsten fälligen Erhöhung des Lenkwinkels eine Erhöhung um den zweifachen Wert (+/-2) erfolgt, wodurch nicht nur die aufgrund der aktuellen Signalflanke, sondern auch die aufgrund der zuvor ausgefallenen Signalflanke fällige Erhöhung des Lenkwinkels einbezogen ist.

Diejenigen Passagen in den einzelnen Sensorsignalen S1 bis S3, die eine nachträgliche Anpassung des Lenkwinkels wegen einer ausgefallenen Signalflanke f erfordern, sind in den Fig. 4 und 5 jeweils zusätzlich mit einem geschwungenen Pfeil F kenntlich gemacht.

Anhand Fig. 5 wird dabei zusätzlich deutlich, wie die ausgefallenen Signalflanken f nacheinander in den einzelnen Sensorsignalen S3, S2, S1 auftreten, wenn die Referenzmarke R nacheinander die Sensorelemente E3, E2 und E1 passiert.

Die nachträgliche Einbeziehung ausgefallener Signalflanken f ist auch für die Erkennung einer Umkehr der Drehrichtung des Lenkrades von Bedeutung. Dies gilt insbesondere dann, wenn eine Umkehr der Drehrichtung des Lenkrades unmittelbar nach einem Zeitpunkt erfolgt, zu dem eine Flanke eines Sensorsignales ausgefallen ist. Dies ist z. B. bei der mit U' bezeichneten dritten Drehrichtungsumkehr aus Fig. 4 der Fall. Das Charakteristische einer Drehrichtungsumkehr, nämlich die unmittelbare Aufeinanderfolge von zwei Flanken in ein und demselben Sensorsignal trat hier zunächst nicht auf, da die entsprechenden Flanken des dritten Sensorsignales S3 ausgefallen sind; denn die Drehrichtungsumkehr erfolgte zu einem Zeitpunkt, zu dem das dritte Sensorsignal S3 gerade durch die Referenzmarke R derart modifiziert wurde, daß einzelne Signalflanken f ausfielen. In diesem Fall wurde die Drehrichtungsumkehr erst später dadurch erkannt, daß zwei Signalflanken l, h des ersten Sensorsignales S1 unmittelbar aufeinander folgen.

Bei einer Auswertung der Sensorsignale S1 bis S3 mittels einer geeigneten Elektronik unter Verwendung der oben dargestellten Auswertungsprinzipien wird jedoch deutlich, daß zwischen den beiden Signalflanken l, h des ersten Sensorsignales S1 im Bereich der Drehrichtungsumkehr U' zwei weitere Signalflanken des dritten Sensorsignales S3 hätten liegen müssen. Durch die nachträgliche Rekonstruktion dieser Signalflanken läßt sich insbesondere auch ermitteln, daß die Drehrichtungsumkehr U' zwischen den beiden ausgefallenen Signalflanken f des dritten Sensorsignales S3 erfolgt ist. Dies kann dann in entsprechender Weise bei der Bestimmung des aktuellen Lenkwinkels berücksichtigt werden. Insbesondere erfolgt der erforderliche Vorzeichenwechsel bei der Addition bzw. Subtraktion des jeweiligen Wertes der Änderung des Lenkwinkels.

Wird eine andere Breite und/oder Positionierung der Referenzmarke R gewählt, so sind die vorstehend erläuterten Auswertungsprinzipien entsprechend anzupassen.

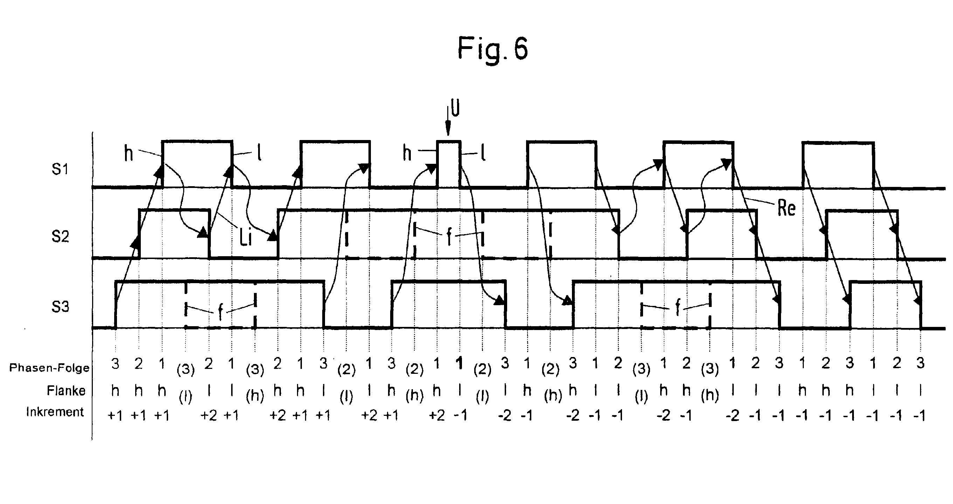

Fig. 6 zeigt die Sensorsignale S1 bis S3 nochmals in einem Fall, in dem eine Umkehr U der Drehrichtung des Lenkrades zu einem Zeitpunkt erfolgt, nachdem gerade an einem der Sensorsignale (vorliegend an dem ersten Sensorsignal S1) eine Signalflanke (vorliegend eine ansteigende Flanke h) aufgetreten ist. In diesem Fall wird die Drehrichtungsumkehr U unmittelbar dadurch erkannt, daß die nächste registrierte Flanke (l) wiederum bei demselben Sensorsignal (S1) auftritt.

Befindet sich zu derselben Zeit die Referenzmarke R gerade im Bereich eines der anderen Sensorelemente (vorliegend des zweiten Sensorelementes E2), so daß das entsprechende Sensorsignal (S2) durch ausfallende Flanken f charakterisiert ist, so müssen beim nachträglichen Erkennen der ausgefallenen Flanken die entsprechenden Korrekturen des aktuellen Wertes des Lenkwinkels vorgenommen werden, wobei selbstverständlich der durch die Änderung der Drehrichtung verursachte Vorzeichenwechsel zu berücksichtigen ist.

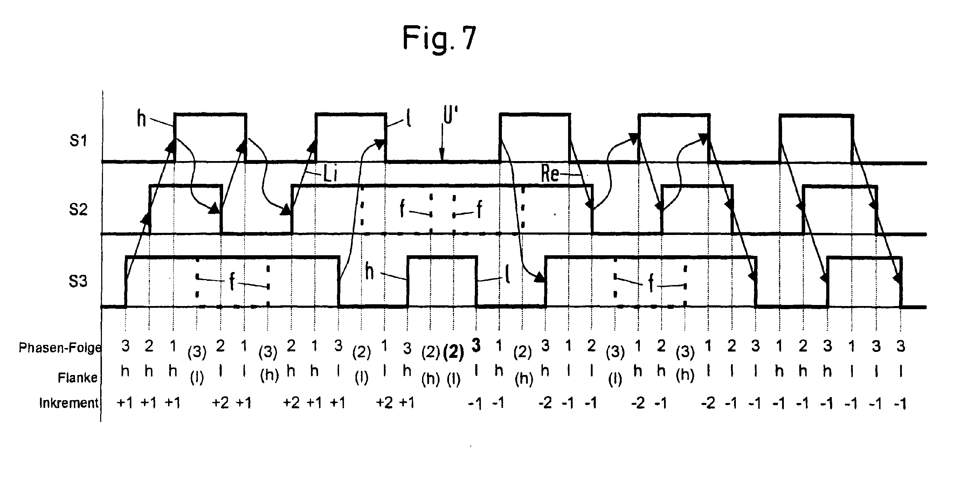

Fig. 7 zeigt nochmals Sensorsignale S1 bis S3 für den Fall, in dem eine Drehrichtungsumkehr U' auftritt, während gerade die Referenzmarke eines der Sensorelemente, nämlich das zweite Sensorelement E2 passiert, so daß die Drehrichtungsumkehr U' wegen eines Ausfalls der Signalflanken zunächst nicht registriert wird. Eine Registrierung der Drehrichtungsumkehr U' erfolgt vielmehr - anhand derselben Prinzipien, die bereits im Zusammenhang mit Fig. 4 dargelegt wurden - durch Auswertung entsprechender Flanken h, l des dritten Sensorsignales S3. Die nachträglich erkannte Drehrichtungsumkehr U' wird dann bei der weiteren Auswertung der Sensorsignale, insbesondere bei der Bestimmung des jeweils aktuellen Lenkwinkels selbstverständlich berücksichtigt.

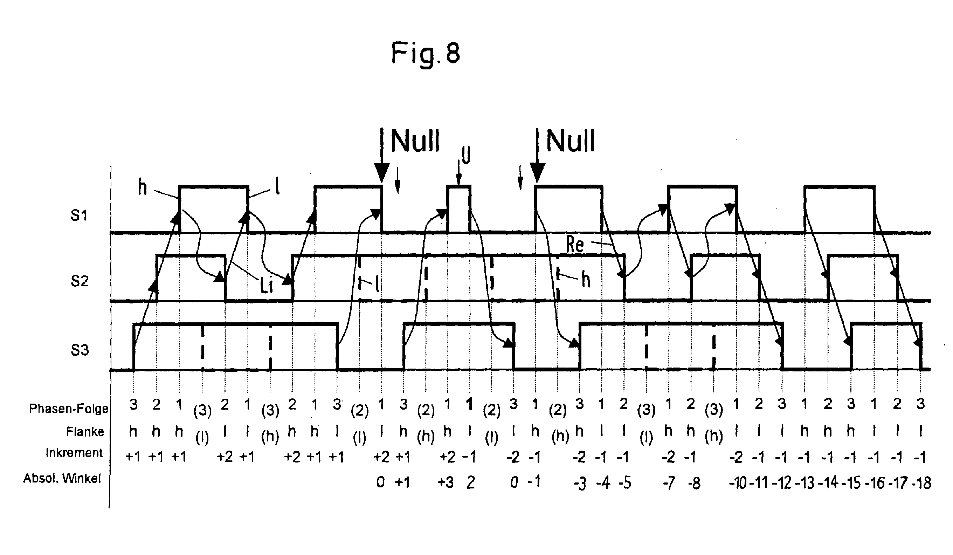

Die Erkennung der Referenz- bzw. Nullpunktlage (Null) sowohl bei einem Linkslauf (gekennzeichnet durch die schräg aufsteigenden Pfeile Li) als auch bei einem Rechtslauf (gekennzeichnet durch die schräg abfallenden Pfeile Re) ist in Fig. 8 dargestellt. Da die Nullpunktlage einer solchen Stellung der Lenkradanordnung entspricht, bei der die Referenzmarke R durch das zweite, mittlere Sensorelement E2 überdeckt ist, wird die Nullpunktlage bei einem Linkslauf bzw. einem Rechtslauf des Lenkrades daran erkannt, daß in dem zweiten Sensorsignal S2 eine abfallende Flanke l bzw. eine aufsteigende Flanke h ausfällt.

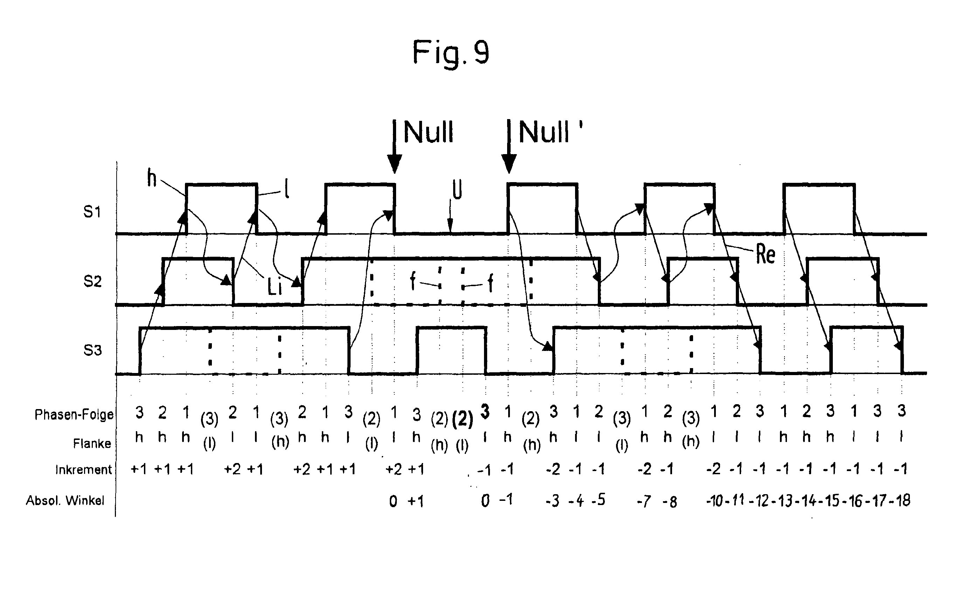

Dabei kann es gemäß Fig. 9 zu einer verspäteten Erkennung der Nullpunktlage (Null') kommen, wenn die Nullpunktlage unmittelbar nach einem Richtungswechsel U durchfahren wird, der wegen ausgefallener Signalflanken f erst verspätet erkannt wurde.

Anhand der Figuren 8 und 9 ist ferner erkennbar, daß ab der ersten Bestimmung der Nullpunktlage nicht mehr nur eine Veränderung des aktuellen Lenkwinkels ("Inkrement"), sondern auch ein absoluter Wert des Lenkwinkels ("absoluter Winkel") angegeben werden kann. Da nach dem Starten eines Kraftfahrzeugs in der Regel schon nach sehr kurzer Zeit das Lenkrad wenigstens einmal zu der Nullpunktlage (entsprechend einem Geradeauslauf) hin bewegt wird, kann die Berechnung des absoluten Lenkwinkels im Betrieb eines Kraftfahrzeugs schon zu einem sehr frühen Zeitpunkt einsetzen, so daß anschließend jederzeit der absolute Lenkwinkel zur Verfügung gestellt werden kann, beispielsweise für Fahrstabilitätssysteme des Kraftfahrzeugs.

Das vorbeschriebene Auswerteverfahren kann durch Verwendung zusätzlicher Sensoren, die speziell zum Auffinden der Referenzmarke oder zur Erhöhung der Genauigkeit bzw. Auflösung dienen, ergänzt werden. Ferner lassen sich sowohl die Erkennbarkeit der Referenzmarke als auch die Auflösung der gesamten Anordnung dadurch verbessern, daß anstelle einer punktweisen Abtastung der Codespur (C) mittels einer Lichtschranke oder dergleichen eine großflächigere Abtastung, z.B. mittels einer CCD-Zeile, erfolgt.

## Patentansprüche

1. Lenkwinkelsensor für Kraftfahrzeuge zur Bestimmung des Lenkwinkels einer Lenkradanordnung mit
- einer Codespur, die einer von zwei zueinander verdrehbaren Baugruppen der Lenkradanordnung zugeordnet ist, und
- einer Erfassungseinrichtung zur Abtastung der Codespur, die der anderen Baugruppe zugeordnet ist und die bei Abtastung der Codespur ein Signal erzeugt, aus dem der Lenkwinkel bestimmbar ist,
wobei die Codespur als Inkrementalspur ausgebildet ist, mit der ein inkrementales Signal erzeugbar ist,
**dadurch gekennzeichnet,**
**daß** in die Inkrementalspur (I) mindestens eine Referenzmarke (R, R', R") integriert ist, mittels der das durch Abtastung der Inkrementalspur (I) erzeugte Signal (S1, S2, S3) lokal modifiziert wird.

2. Lenkwinkelsensor nach Anspruch 1, **dadurch gekennzeichnet, daß** die Referenzmarke (R, R', R") zwischen Markierungen (M) der Inkrementalspur (I) angeordnet ist.

3. Lenkwinkelsensor nach Anspruch 1 oder 2, **dadurch gekennzeichnet, daß** die Referenzmarke (R, R', R") quer zur Erstreckungsrichtung (E) der Inkrementalspur (I) nicht über diese hinausragt.

4. Lenkwinkelsensor nach einem der Ansprüche 1 bis 3, **dadurch gekennzeichnet, daß** die Inkrementalspur (I) durch in Erstreckungsrichtung (E) der Inkrementalspur (I) periodisch hintereinander angeordnete Markierungen (M) gebildet wird.

5. Lenkwinkelsensor nach Anspruch 4, **dadurch gekennzeichnet, daß** die Inkrementalspur (I) durch eine periodische Strichstruktur gebildet wird.

6. Lenkwinkelsensor nach Anspruch 4 oder 5, **dadurch gekennzeichnet, daß** die Referenzmarke (R, R', R") durch Veränderung mindestens einer Markierung (M) der Inkrementalspur (I) und/oder mindestens eines Zwischenraumes (Z) zwischen zwei Markierungen (M) gebildet wird.

7. Lenkwinkelsensor nach Anspruch 6, **dadurch gekennzeichnet, daß** die Referenzmarke (R, R', R") durch Veränderung der Form, der Ausdehnung und/oder der Beschaffenheit einer Markierung (M) und/oder eines Zwischenraumes (Z) gebildet wird.

8. Lenkwinkelsensor nach Anspruch 6 oder 7, **dadurch gekennzeichnet, daß** die Referenzmarke (R, R") durch Überdekkung mindestens eines Zwischenraumes (Z) mit einer Markierung (M) gebildet wird oder durch das Ersetzen mindestens einer Markierung (M) durch einen Zwischenraum (Z).

9. Lenkwinkelsensor nach einem der vorhergehenden Ansprüche, **dadurch gekennzeichnet, daß** die Erfassungseinrichtung mehrere Sensorelemente (E1, E2, E3) umfaßt, die entlang der Erstreckungsrichtung (E) der Codespur (C) hintereinander angeordnet sind.

10. Lenkwinkelsensor nach Anspruch 9, **dadurch gekennzeichnet, daß** mindestens drei Sensorelemente (E1, E2, E3) vorgesehen sind, die vorzugsweise in gleichen Abständen hintereinander angeordnet sind.

11. Lenkwinkelsensor nach Anspruch 9 oder 10, **dadurch gekennzeichnet, daß** mindestens zwei der Sensorelemente (E1, E2, E3) in einem Abstand angeordnet sind, der ungleich der Periode (b) der Inkrementalspur (I) ist.

12. Verfahren zur Bestimmung des Lenkwinkels einer Lenkradanordnung in einem Kraftfahrzeug mit einem Lenkwinkelsensor nach einem der vorhergehenden Ansprüche, wobei
a) zur Abtastung der Codespur (C) eine Erfassungseinrichtung mit mindestens zwei Sensorelementen ( E1, E2, E3) verwendet wird,
b) die von den Sensorelementen (E1, E2, E3) durch Abtastung der Codespur (C) erzeugten Signale (S1, S2, S3) einer Auswerteeinrichtung zugeführt werden,
c) aus den der Auswerteeinrichtung zugeführten Signalen (S1, S2, S3) der einzelnen Sensorsignale (E1, E2, E3) der jeweils aktuelle Lenkwinkel bestimmt wird, indem der Lenkwinkel aufgrund charakteristischer, durch Abtastung der Inkrementalspur (I) erzeugter Signale (h, l) jeweils um einen vorbestimmten Wert verändert wird und
d) die durch Auswertung des von einem Sensorelement erzeugten ersten Signales ermittelte Änderung des Lenkwinkels korrigiert wird, wenn durch Auswertung des von einem anderen Sensorelement erzeugten zweiten Signales festgestellt wird, daß ein aus dem ersten Signal ermittelter Wert des Lenkwinkels durch die lokale Modifikation des ersten Signales aufgrund der Referenzmarke (R, R', R") verfälscht worden ist.

13. Verfahren nach Anspruch 12, **dadurch gekennzeichnet, daß** in die Inkrementalspur (I) eine Referenzmarke (R, R', R") derart integriert ist, daß im Bereich der Referenzmarke (R, R', R") einzelne Flanken (f) des Inkrementalsignales unterdrückt werden und daß die unterdrückten Signalflanken (f) nachträglich ermittelt und in die Bestimmung des Lenkwinkels einbezogen werden.
